(19) Europäisches Patentamt
European Patent Office
Office européen des brevets

(11) Numéro de publication: **0 334 692**
**A1**

(12) **DEMANDE DE BREVET EUROPEEN**

(21) Numéro de dépôt: **89400453.0**

(22) Date de dépôt: **17.02.89**

(51) Int. Cl.⁴: **C 08 L 67/06**
C 08 K 3/30
//(C08L67/06,83:12)

(30) Priorité: **19.02.88 FR 8802014**

(43) Date de publication de la demande:
**27.09.89 Bulletin 89/39**

(84) Etats contractants désignés: **DE ES FR GB IT**

(71) Demandeur: **ECOLE NATIONALE SUPERIEURE DE CREATION INDUSTRIELLE**
**48, rue Saint Sabin**
**F-75011 Paris (FR)**

(72) Inventeur: **Rechner, Luc**
**25 rue Decrès**
**F-75014 Paris (FR)**

(74) Mandataire: **Mongrédien, André et al**
**c/o SOCIETE DE PROTECTION DES INVENTIONS 25, rue de Ponthieu**
**F-75008 Paris (FR)**

(54) **Système de constituants pour la préparation d'un alliage polymère usinable, moulable et modelable.**

(57) L'invention concerne un système de constituants pour la préparation d'un nouvel alliage polymère qui comprend un constituant liquide A composé de copolymère siloxane-polyéther et de polyester thermodurcissable et un constituant solide B composé de sulfate de calcium semi-hydraté et d'un agent catalytique de thermodurcissage du polyester.

Le nouveau polymère obtenu par mélange des constituants A et B peut servir à réaliser des blocs ou des formes usinables, des objets moulés, ou des objets modelés.

Il peut être utilisé dans les domaines de l'industrie et des arts.

EP 0 334 692 A1

## Description

### Système de constituants pour la préparation d'un alliage polymère usinable, moulable et modelable.

La présente invention a pour objet un système de constituants utilisable pour la préparation d'un alliage polymère, l'alliage polymère obtenu à partir de ce système et son procédé de fabrication.

De façon plus précise, elle concerne des alliages polymères formés en mélangeant une matière organique avec un composé inorganique tel que le sulfate de calcium.

De tels alliages polymères sont utilisables en particulier dans le domaine du design et/des arts plastiques, ainsi que pour la réalisation de moules servant par exemple à la fabrication de pièces de séries limitées.On a déjà envisagé de réaliser des matériaux mixtes de ce type en mélangeant une résine polyester insaturée polymérisable avec de la silice colloïdale aqueuse stabilisée par un alcali et du sulfate de calcium, comme il est décrit dans le brevet FR-A-2 344 593.

Cependant, les produits obtenus à partir de telles compositions ne présentent pas des caractéristiques mécaniques équivalentes à celles du polyester de départ ; par ailleurs, ils restent hydrolysables.

La présente invention a pour objet un système de constituants pour la préparation d'un alliage polymère qui permet de réaliser des matériaux usinables, moulables ou modelables, résistant à l'hydrolyse et convenant à de nombreuses applications.

Le système de constituants selon l'invention comprend :

- un premier constituant liquide A comprenant
. 0,5 à 20% en poids d'un copolymère siloxane-polyéther, et
. 80 à 99,5% en poids d'un polyester insaturé thermodurcissable ; et
- un deuxième constituant solide B comprenant du sulfate de calcium semi-hydraté et un agent catalytique de thermodurcissage du polyester.

De préférence, dans le premier constituant liquide A, la proportion de copolymère siloxane-polyéther est de 1 à 5% en poids et la proportion de polyester insaturé thermodurcissable est de 95 à 99% en poids.

Selon l'invention, le polyester thermodurcissable du premier constituant A est constitué par un polyester insaturé associé à un monomère de réticulation, ce qui correspond aux polymères thermodurcissables du commerce.

A titre d'exemple, le monomère de réticulation peut être le styrène, l'α-méthylstyrène, le O-chlorostyrène, le vinyltoluène, les acrylates et les méthacrylates, les acides acrylique et méthacrylique, le divinyl benzène, l'acétate de vinyle, etc. ...

Le polyester insaturé est le produit de la réaction de polyestérification d'acides dicarboxyliques et de polyalcools. Ces acides dicarboxyliques peuvent englober les anhydrides correspondants. A titre d'exemples d'acides et d'anhydrides dicarboxyliques, on peut citer les acides et anhydrides phtalique, tétrahydrophtalique, maléique, adipique, succinique, tétrabromophtalique, fumarique, etc. ...

Les polyalcools peuvent être des dialcools, des trialcools etc. ... A titre d'exemples de polyalcools, on peut citer les glycols tels que l'éthylène glycol, le propylène glycol, le butylène glycol, le néopentyl glycol, le diéthylène glycol, le dipropylène glycol, le polyéthylène glycol, le polypropylène glycol, et des trialcools tels que le triméthylol éthane, le triméthylol propane et le pentaérythritol.

Le copolymère siloxane-polyéther utilisé peut répondre à la formule :

$$CH_3-\underset{CH_3}{\overset{CH_3}{|}{Si}}-O-\underset{CH_3}{\overset{CH_3}{Si}}-O-\left[\underset{CH_3}{\overset{R}{Si}}-(C_2H_4O)_x-(C_3H_6-O)_y\right]_n-\underset{CH_3}{\overset{CH_3}{Si}}CH_3$$

dans laquelle R est un radical hydrocarboné aliphatique ou aromatique, saturé ou insaturé, et x, y et n sont des nombres supérieurs à 1.

A titre d'exemple, R peut être le radical méthyle.

On peut bien entendu utiliser dans l'invention d'autres copolymères formés à partir de siloxanes et de polyéthers différents.

Toutefois, on peut aussi utiliser dans l'invention un copolymère siloxane-polyéther comportant des insaturations éthyléniques.

Les agents catalytiques de thermodurcissage du polyester utilisés dans la présente invention sont des agents catalytiques classiques tels que les durcisseurs habituellement utilisés pour la réticulation des résines de polyester insaturé.

A titre d'exemple d'agents catalytiques, on peut citer les peroxydes comme le peroxyde de benzoyle, le peroxyde de dibenzoyle, l'hydroperoxyde de cumène, le peroxyde de t-butyle.

La quantité d'agent catalytique présente dans le second constituant B doit être suffisante pour que l'on obtienne par mélange des constituants A et B un durcissement satisfaisant du polyester insaturé.

Généralement, on utilise de 0,5 à 6% en poids de catalyseur par rapport au poids de résine polyester utilisé.

Etant donné que les constituants A et B peuvent être mélangés avec des proportions en poids A/B pouvant aller par exemple de 100/40 à 100/250, le second oonstituant B comprend généralement :
- 85 à 99,8% en poids de sulfate de calcium semi-hydraté, et
- 0,2 à 15% en poids d'agent catalytique de durcissage du polyester.

Le système à deux constituants de l'invention peut aussi comprendre d'autres additifs, par exemple des accélérateurs ou retardateurs du durcissement de la résine polyester, des adjuvants thixotropiques, des agents tensioactifs, des adjuvants anti-retrait, des agents anti-usure, des colorants etc.

A titre d'exemple de tels additifs, on peut citer les produits suivants :
= oxyde de magnésie, pour augmenter la tenue au feu ;
- gel de silice, comme agent thixotropique et d'anti-coulures, dans une proportion de 1 à 5% de la partie liquide ;
= hydrate d'alumine, comme agent anti-retrait et de tenue à la chaleur ;
- talc, microbilles, farine de bois ou charges friables, pour faciliter l'usinabilité et le ponçage manuel ;
- divers colorants, pigments ou particules colorées, pour des problèmes d'aspect ;
- poudres métalliques diverses, pour des problèmes d'aspect et de conductivité thermique ;
- charges conductrices, pour des applications électriques ou antistatiques ;
- agents gonflants et agents porophores, pour l'obtention de matériaux allégés ou alvéolaires ;
- poudre ou billes de polymères thermoplastiques tels que polyéthylène et polyméthacrylate de méthyle comme agents anti-retrait ;
- éléments minéraux tels que l'hydrate d'alumine, les diatomées, les microsphères minérales et les agrégats divers, et éléments organiques ininflammables tels que des microsphères phénoliques pour améliorer la tenue au feu et limiter le retrait.

Ces additifs peuvent être ajoutés indifféremment au constituant liquide A ou au constituant solide B.

De préférence, les additifs sont introduits dans la partie liquide lorsqu'ils sont liquides et dans la partie solide lorsqu'ils sont solides.

Les proportions d'additifs ajoutées aux constituants A et/ou B sont relativement faibles ; généralement elles représentent au plus 30% en poids du constituant A ou du constituant B.

L'invention concerne également un procédé de fabrication d'un alliage polymère à partir du système de constituants décrit ci-dessus.

Ce procédé consiste à mélanger 100 parties en poids du premier constituant liquide A avec 40 à 250 parties en poids du second constituant solide B, et à laisser durcir le mélange des deux constituants.

Pour mettre en oeuvre ce procédé, on mélange ainsi, soit manuellement, soit mécaniquement, les deux constituants A et B, dans les proportions voulues qui dépendent en particulier des caractéristiques que l'on veut obtenir.

Après cette opération, on réalise le durcissement soit à la température ambiante, soit à chaud, par exemple à une température de 10°C à 180°C.

Lorsqu'on opère à la température ambiante, il est préférable d'utiliser des constituants A et/ou B contenant un accélérateur de durcissement.

Dans ce cas, la quantité d'accélérateur de durcissement représente généralement 0,2 à 5% en poids de la quantité de polyester insaturé.

Le mélange peut être mis sous la forme voulue par moulage direct dans un moule, ou par d'autres procédés classiques, par exemple à chaud par moulage à la presse. On peut aussi réaliser des dépôts par projection au moyen de dispositifs classiques dans lesquels se fera également l'opération de mélange.

L'invention concerne encore l'alliage polymère obtenu par ce procédé, qui comprend :
- 0,15 à 14% en poids d'un copolymère siloxane polyéther,
- 23 à 70% en poids de polyester réticulé, et
- 29 à 70% en poids de sulfate de calcium semi-hydraté.

De préférence, l'alliage comprend :
- 0,3 à 3,5% en poids de copolymère siloxane polyéther,
- 27 à 70% en poids de polyester réticulé, et
- 29 à 70% en poids de sulfate de calcium semi-hydraté.

Le produit obtenu par le procédé de l'invention est un nouvel alliage polymère que l'on se propose de mettre sur le marché sous la dénomination commerciale de "SPS", rappelant la présence des trois constituants essentiels Siloxane, Polyester et Sulfate. Il présente des caractéristiques spécifiques qui résultent de ce que :
- le copolymère siloxane-polyéther apporte, dans l'alliage final "SPS", imperméabilisation et hydrofugation, et une meilleure usinabilité (travail sur machine et polissage) ;
- le sulfate de calcium, sous forme de charge active apporte la compacité et l'aspect noble marbré, tout en jouant le rôle d'agent anti-retrait et de meilleure tenue au feu ;
- le polyester thermodurcissable constituant un liant réticulable permet le moulage et la mise en forme rapide, à chaud et à froid.

L'alliage "SPS", après adaptation à chaque emploi par les proportions de ses constituants de base, et par adjonction éventuelle de tout adjuvant approprié, forme, une fois durci, un matériau polymère original par ses qualités intrinsèques d'usinabilité, d'aspect et de possibilités de mise en forme.

Ce matériau est particulièrement adapté au design, aux arts plastiques et à la fabrication de moules car il est

facile à mettre en oeuvre à la température ambiante. En effet, il suffit de mélanger le constituant liquide A et le constituant solide B en poudre sans effectuer de microdosages de système catalytique ou de durcisseur pour obtenir le matériau thermodurcissable comportant des additifs d'adaptation. On peut aussi ajouter les additifs d'adaptation après mélange du constituant A et du constituant B si on le désire. Ce mélange donne une pâte malléable qui peut être moulée ou mise en forme directement. Après durcissement, soit à la température ambiante, soit à chaud pour accélérer la prise, le matériau obtenu résistant et dur est usinable et convient ainsi aux procédés de fabrication assistés par ordinateur (FAO) et au design. Il est également taillable et convient pour la sculpture et les arts décoratifs. On peut, par ailleurs, le colorer préalablement dans la masse en ajoutant des colorants au constituant A ou au constituant B. On peut aussi le colorer par transfert à partir d'un support coloré, en le déposant sous une faible épaisseur, par exemple de 3mm, sur un support coloré.

Le produit durci n'est pas hydrolysable par l'eau et conserve ses propriétés après 15 mois d'immersion dans l'eau, ce qui n'est pas le cas des matériaux à base de polymères thermodurcissables qui sont hydrolysables à l'eau,tels les polyesters courants type maléique-phtalique. De plus, le retrait insensible de ce matériau lors du durcissement permet l'incorporation d'armatures rigides d'acier dans sa masse contrairement à ce que l'on obtient avec des polyesters thermodurcissables du commerce qui présentent un fort retrait.

On peut aussi réaliser à partir de l'alliage polymère de l'invention un matériau composite formé de l'alliage polymère armé de fibres de renfort, par exemple de fibres de verre, de carbone, d'acier ou d'autres renforts, armatures ou granulats.

D'autres caractéristiques et avantages de l'invention apparaîtront mieux à la lecture des exemples suivants donnés bien entendu à titre illustratif et non limitatif.

**Exemple 1.**

Dans cet exemple, on prépare un alliage polymère conforme à l'invention.

Le premier constituant A liquide comprend

- un polyester insaturé constitué par le produit de la réaction d'anhydride maléique avec de l'acide phtalique qui est associé à du styrène, un copolymère siloxane polyéther de formule :

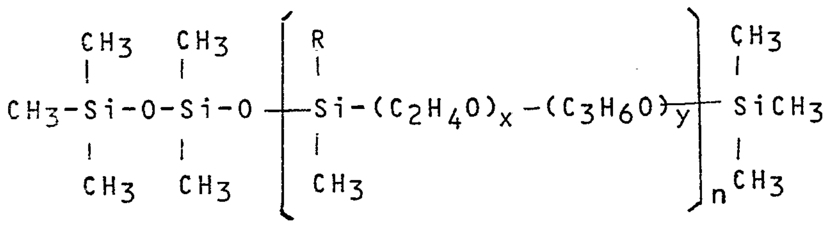

ayant un poids moléculaire de 400 à 500,

- un accélérateur de durcissement constitué par de la diéthylaniline,
- des adjuvants thixotropiques et tensioactifs, et
- du talc comme agent pour faciliter l'usinabilité.

Le second constituant solide B comprend du sulfate de calcium semi-hydraté, un catalyseur constitué par de la poudre de peroxyde de dibenzoyle et un adjuvant anti-retrait constitué par de la poudre polyméthyl méthacrylate.

Les compositions respectives des constituants A et B sont données dans le tableau annexé.

A partir de ces constituants, on forme un mélange de base en utilisant 100 parties en poids du constituant A et 100 parties en poids du constituant B. Par mélange de ces deux constituants, on obtient une pâte manipulable à la température ambiante (15 à 20°C) entre 1h1/2 et 2h après le mélange. On peut introduire cette pâte dans un moule en plâtre surfacée anti-adhérent et l'on obtient après 4h environ un matériau dur démoulable ou usinable.

Si l'on chauffe l'ensemble à 50°C, on obtient un matériau dur, démoulable ou usinable, en une demi heure.

On peut aussi réaliser le moulage à la presse au-dessus de 100°C. Ainsi, lorsqu'on opère à 150°C, on peut obtenir un produit démoulable en 4min.

Le matériau obtenu est résistant et dur, et on constate que même réduit en poudre par sciage ou meulage, le sulfate de calcium après durcissement final de ce matériau, n'a plus de prise hydraulique possible, ce qui confirme son interaction dans l'alliage.

La densité moyenne du matériau obtenu est de 1,5.

**Exemples 2 à 6.**

On opère comme dans l'exemple 1 mais en utilisant des proportions différentes des constituants formant la partie liquide A et la partie solide B. Les compositions des mélanges des constituants A et B sont données dans le tableau annexé.

Dans ce tableau, on a donné également les caractéristiques des mélanges obtenus.

Bien que dans ces exemples on ait utilisé des parties en poids du premier constituant A et du second constituant B dont le rapport en poids A/B varie de 0,6 à 1,4, il va de soi que l'invention n'est pas limitée à de

tels mélanges.

Lorsqu'on diminue la proportion du constituant A, on accélère la prise du mélange. En revanche, lorsqu'on diminue la quantité de constituant B on ralentit la prise.

Les matériaux obtenus à partir de ces mélanges peuvent trouver des applications variées et étendues.

A titre d'exemple on peut former à partir de ces mélanges, des blocs ou formes usinables. On peut en particulier réaliser l'usinage par fabrication assistée par ordinateur en ajoutant de préférence au mélange 5% de poudre d'aluminium, ce qui permet de réaliser cet usinage de façon aisée, sans encrassement et sans anomalie d'usure de l'outillage.

On peut fabriquer à partir du mélange des objets moulés concernant le domaine industriel ou artistique, qu'il s'agisse d'exemplaires uniques, de petites séries ou de grandes séries. Les formulations sont adaptées pour obtenir, soit des moulages massifs, soit des éléments stratifiés ou partiellement stratifiés, par exemple avec des renforts de fibres de verre ou carbone.

Ainsi, on a réalisé des moules de thermoformage à partir du mélange de l'exemple 1, qui ont présenté une bonne tenue en température lors de thermoformages effectués sur machines Illig. On a aussi réalisé à partir du mélange de l'exemple 1, un modèle de fonderie qui a permis la réalisation en bronze d'un élément d'assemblage d'une table pour un designer.

Les mélanges de l'invention conviennent aussi pour la réalisation de modelages ou de mises en forme directes, avec ou sans support ou ossature, par obtention d'une consistance spatulable ou modelable thixotrope pour non coulure (action en particulier du gel de silice) et permettant en particulier la recherche directe de formes en prototypes ou objets uniques (modèles, sculptures, mobiliers, maquettes etc.).

Les objets formés peuvent à volontiers être modifiés, usinés, sculptés, surfacés dans la recherche de la forme et l'aspect final.

A titre d'exemple, on a réalisé une sculpture directement montée et taillée à la gradine. La mise en forme directe a été possible grâce à la présence dans le mélange d'un agent thixotropique constitué par du gel de silice. Le montage s'est fait "à la filasse", puis par enduction complémentaire (râjout spatulable ne coulant pas) pour la taille à la gradine. Le non retrait a été constaté du fait que deux tubes d'acier traversaient les 2/3 de la masse de la statue en vue de la fixation sur un socle, sans provoquer la moindre fissuration lors du durcissement du matériau. La taille a été réalisée avec des gradines traitées au carbure utilisé pour les marbres très durs.

On a aussi réalisé à partir du mélange de l'invention, une polychromie ayant une épaisseur de 3mm et reportée sur jute. Dans ce cas, on a ajouté au mélange des poudres de couleurs diverses. Une telle polychromie sur trame support est reportable et incorporable dans des bâtiments, en fresque, ou pour une décoration murale ainsi que pour du mobilier.

On a encore réalisé à partir du mélange de l'exemple 1, un matériau armé par un tissu de fibres de verre sous la forme d'une pyramide de faible épaisseur.

TABLEAU

| | Constituants | Ex 1 | Ex 2 | Ex 3 | Ex 4 | Ex 5 | Ex 6 |
|---|---|---|---|---|---|---|---|
| A | Polyester maléique-phtalique + styrène | 100 | 100 | 100 | 100 | 100 | 100 |
| | Copolymère siloxane-polyéther | 2 | 3 | 4 | 2,5 | 2 | 3 |
| | Solution à 10% de diéthyl aniline | 1,5 | 2 | 2,5 | 2 | 1,5 | 1,5 |
| | Adjuvants thixotropiques et tensioactifs | 2,5 | 4 | 3 | 3 | 2,5 | 2 |
| | Talc | 16 | 20 | 25 | 30 | 15 | 20 |
| B | Sulfate de calcium semi hydraté | 100 | 80 | 120 | 60 | 150 | 50 |
| | Catalyseur à 50% de peroxyde de dibenzoyle | 2 | 3 | 4 | 3 | 2 | 2 |
| | Adjuvant anti-retrait | 20 | 25 | 16 | 40 | 30 | 35 |
| | Caractéristiques du mélange A+B | prise en 4h à la température ambiante | prise 2 fois plus rapide que dans l'ex.1 | prise très rapide, utilisable pour projection | plus fluide que dans l'ex.1,à prise rapide utilisable pour le coulage | mortier épais | mortier fluide à prise lente |

## Revendications

1. Système de constituants pour la préparation d'un alliage polymère, caractérisé en ce qu'il comprend-
un premier constituant liquide A comprenant
. 0,5 à 20% en poids d'un copolymère siloxane-polyéther, et
. 80 à 99,5% en poids d'un polyester insaturé thermodurcissable ; et
- un deuxième constituant solide B comprenant du sulfate de calcium semi-hydraté et un agent catalytique de thermodurcissage du polyester.

2. Système selon la revendication 1, caractérisé en ce que le premier constituant liquide A comprend
- 1 à 5% en poids de copolymère siloxane-polyéther, et
- 95 à 99% en poids de polyester insaturé thermodurcissable.

3. Système selon l'une quelconque des revendications 1 et 2, caractérisé en ce que le copolymère siloxane-polyéther comporte des insaturations éthyléniques.

4. Système selon l'une quelconque des revendications 1 et 3, caractérisé en ce que le premier constituant A et/ou le second constituant B comprend en outre un accélérateur de durcissement.

5. Système selon l'une quelconque des revendications 1 à 4, caractérisé en ce que le premier constituant A et/ou le second constituant B comprend au moins un additif.

6. Système selon la revendication 5, caractérisé en ce que l'additif est choisi parmi les adjuvants thixotropiques, les agents tensio-actifs, les adjuvants anti-retrait, les agents anti-usure, les agents anti-feu, les agents facilitant l'usinage, les poudres métalliques, les colorants et les charges.

7. Alliage polymère comprenant :
- 0,15 à 14 en poids d'un copolymère siloxane polyéther,
- 23 à 70% en poids de polyester réticulé, et
- 29 à 70% en poids de sulfate de calcium semi-hydraté.

8. Alliage polymère selon la revendication 6, caractérisé en ce qu'il comprend
- 0,3 à 3,5% en poids de copolymère siloxane polyéther,
- 27 à 70% en poids de polyester réticulé, et
- 29 à 70% en poids de sulfate de calcium semi-hydraté.

9. Procédé de préparation d'un alliage polymère à partir du système de constituants selon l'une quelconque des revendications 1 à 6, caractérisé en ce qu'il consiste à mélanger 100 parties en poids du premier constituant liquide A avec 40 à 250 parties en poids du second constituant solide B, et à laisser durcir le mélange des deux constituants.

10. Procédé selon la revendication 9, caractérisé en ce que l'on réalise le durcissement du mélange à une température allant de 10° C à 180° C.

Office européen des brevets

# RAPPORT DE RECHERCHE EUROPEENNE

Numero de la demande

EP 89 40 0453

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 344 593 (H.H. ROBERTSON CO.)<br>* Revendications 1-12; page 7, lignes 15-29 * | 1-10 | C 08 L 67/06<br>C 08 K 3/30 //<br>(C 08 L 67/06<br>C 08 L 83:12 ) |
| A | EP-A-0 246 913 (SHIN-ETSU CHEMICAL CO.)<br>* Revendications 1-4 * | 1-10 | |
| A | WO-A-8 604 908 (BRIDGES CORP. PTY. LTD)<br>* Revendications 1-29 * | 1 | |
| A | FR-A-2 001 364 (BAYER AG)<br>* Revendications * | 1 | |
| | | | **DOMAINES TECHNIQUES RECHERCHES (Int. Cl.4)** |
| | | | C 08 L<br>C 08 K |

Le présent rapport a été établi pour toutes les revendications

| Lieu de la recherche | Date d'achèvement de la recherche | Examinateur |
|---|---|---|
| LA HAYE | 09-06-1989 | DECOCKER L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)